# EUROPEAN PATENT APPLICATION

(11) **EP 2 879 000 A1**
(43) Date of publication of application: **03.06.2015**
(21) Application number: 14189564.9
(22) Date of filing: 20.10.2014
(51) Int. Cl.: G03B 21/14, G06F 3/042

(54) **Projector device**

(30) Priority: 31.10.2013 JP 2013227367
(71) Applicant: Funai Electric Co., Ltd., Daito city Osaka 574-0013 (JP)
(72) Inventor: Kanehira, Takaharu, Osaka 574-0013 (JP)
(74) Representative: Osha Liang

(57) **Abstract**

A projector device of a rear projection type includes a screen (120) including a display region (121) in which an image is displayed and a calibration region (122) where at least a light reflecting member or a light absorbing member is disposed on a front side of the screen (120), a projector emitting light to the screen (120) from a rear side of the screen, a light receiver sensing light reflected to the rear side, and a user interface detecting a touch operation on the image in the display region (121) based on a signal level of the reflected light. The interface includes a threshold adjuster that adjusts a threshold level for detecting the touch operation based on a signal level of light reflected from the calibration region (122) and an operation detector that detects the touch operation by comparing a signal level of light reflected from the display region (121) with the adjusted threshold level.

## Description

### [Technical Field]

The present invention relates generally to a projector device of a rear projection type and more particularly relates to a projector device that detects a touch operation from a user.

### [Background Art]

A conventional technique detects a touch operation from a user on an image displayed on a screen in a projection device of a rear projection type (for example, see Patent Document 1). In Patent Document 1, the touch operation from the user is detected by detecting a shadow of a finger of the user from a rear side of the screen.

### [Related Art Documents]

### [Patent Documents]

[Patent Document 1] Japanese Unexamined Patent Application Publication No. 2009-070245

However, in the conventional technology above, a detection precision of the touch operation decreases when a state of the projector device changes (such as when, for example, an amount of light of a light source changes due to temperature change).

### [Summary of the Invention]

One or more embodiments of the invention provide a projector device that can improve detection precision of a touch operation from a user on an image displayed on a screen.

According to one aspect of the present invention, a projector device of a rear projection type may include a screen comprising a display region in which an image is displayed and a calibration region where at least a light reflecting member or a light absorbing member is disposed on a front side of the screen; a projector that emits light to the screen from a rear side of the screen; a light receiver that senses light reflected to the rear side of the screen; and a user interface that detects a touch operation on the image displayed in the display region based on a signal level of the reflected light, wherein the user interface may include: a threshold adjuster that adjusts a threshold level for detecting the touch operation based on a signal level of light reflected from the calibration region; and an operation detector that detects the touch operation by comparing a signal level of light reflected from the display region with the adjusted threshold level.

According to one or more embodiments of this configuration, the threshold level for detecting the touch operation can be adjusted based on the signal level of the reflected light sensed in the calibration region of the screen. Therefore, even in a situation where a state of the projector device is changed, the touch operation can be detected using a threshold level suited to this changed state. As a result, a detection precision of the touch operation from the user on the image displayed on the screen can be improved.

For example, the calibration region may extend along a longitudinal direction of the screen.

According to one or more embodiments of this configuration, because the calibration region extends along a longitudinal direction of the screen (or extends in the horizontal direction), the threshold level can be suitably adjusted even when the signal level of the reflected light differs at the longitudinal (or horizontal) position. As a result, the detection precision of the touch operation from the user on the image displayed on the screen can be further improved.

For example, the threshold adjuster may adjust a threshold level for each of a plurality of longitudinal positions in the calibration region based on a signal level of light reflected from the each of the plurality of longitudinal positions, and the operation detector may detect the touch operation by comparing a signal level of light reflected from one of the plurality of longitudinal positions in the display region with the adjusted threshold level for the one of the plurality of longitudinal positions in the display region.

According to one or more embodiments of this configuration, for each of the plurality of longitudinal positions, the threshold level can be adjusted based on the signal level of the reflected light sensed in the longitudinal position. Therefore, when detecting the touch operation, the threshold level corresponding to the longitudinal position can be used and the detection precision of the touch operation can be further improved.

For example, the calibration region may further extend along a transverse direction of the screen, the threshold adjuster may further adjust a threshold level for each of a plurality of transverse positions in the calibration region based on a signal level of light reflected from the each of the plurality of transverse positions, and the operation detector may detect the touch operation by comparing a signal level of light reflected from a position represented by a combination of one of the plurality of longitudinal positions and one of a plurality of transverse positions in the display region with the adjusted threshold level for the combination of the longitudinal position and the transverse position in the display region.

According to one or more embodiments of this configuration, the calibration region can be extended along a transverse direction (or in the vertical direction) of the screen. Moreover, for each of the plurality of transverse positions, the threshold level can be adjusted based on the signal level of the reflected light sensed in the transverse position. Therefore, when detecting the touch operation, the threshold level corresponding to the combination of the longitudinal position and the transverse position can be used and the detection precision of the touch operation can be further improved.

For example, the calibration region may include a light reflecting region where the light reflecting member is disposed on the front side of the screen, and the threshold adjuster may adjust the threshold level so that the threshold level becomes lower than a signal level of light reflected from the light reflecting region.

According to one or more embodiments of this configuration, the threshold level can be adjusted so the threshold level is lower than the signal level of the reflected light sensed in the light reflecting region. Therefore, the threshold level can be made lower than a signal level of a light reflected from an object for performing the touch operation (for example, a finger of a user, a stylus pen, or the like) (referred to hereinbelow as a touch object), and the detection precision of the touch operation can be further improved.

For example, the calibration region may include a light absorbing region where the light absorbing member is disposed on the front side of the screen, and the threshold adjuster may adjust the threshold level so that the threshold level becomes higher than a signal level of light reflected from the light absorbing region.

According to one or more embodiments of this configuration, the threshold level can be adjusted so the threshold level is higher than the signal level of the reflected light sensed in the light absorbing region. Therefore, the threshold level can be made higher than the signal level of the light reflected from the rear surface of the screen, and the detection precision of the touch operation can be further improved.

For example, the light receiver may sense a visible light component of the reflected light.

According to one or more embodiments of this configuration, the visible light component of the reflected light can be sensed. Therefore, the touch operation can be detected using a light for displaying the image. That is, a device configuration can be made simple because a new light source is not needed to detect the touch operation.

For example, the threshold adjuster may further adjust the threshold level according to the image displayed in the display region.

According to one or more embodiments of this configuration, when the signal level of the light reflected from the touch object changes according to the image displayed in the display region, the threshold level can be changed by adapting to the change of the image and the detection precision of the touch operation can be further improved.

For example, the projector may emit a light corresponding to the image displayed in the display region to the calibration region.

According to one or more embodiments of this configuration, the light corresponding to the image displayed in the display region can be irradiated to the calibration region. Therefore, when the signal level of the light reflected from the touch object changes according to the image displayed in the display region, the threshold level can be adjusted by adapting to the change of the image and the detection precision of the touch operation can be further improved.

For example, the projector may emit light including an invisible light component for sensing the touch operation, and the light receiver may sense an invisible light component of the reflected light.

According to one or more embodiments of this configuration, the invisible visible light component of the reflected light can be sensed. Therefore, the touch operation can be detected using a component (invisible light component) of a light other than a component (visible light component) of the light for displaying the image. That is, the touch operation can be stably detected regardless of the image displayed in the display region.

One or more embodiments of the present invention are not only able to be realized as a projector device or the like comprising such characteristic processing units or processors but can also be realized as, for example, an operation detection method whose steps are the processes executed by the characteristic processing units or processors included in the projector device. Moreover, one or more embodiments of the present invention can also be realized as a program for making a computer function as the characteristic processing units included in the projector device or a program that makes a computer execute the characteristic steps included in the operation detection method. Moreover, in one or more embodiments, such a program can be distributed on a non-temporary storage medium that a computer can read, such as a compact disk read-only memory (CD-ROM), or a communication network, such as the Internet.

The projector device according to one or more embodiments of the present invention can improve the detection precision of the operation from the user on the image displayed on the screen.

### [Brief Description of Drawings]

FIG. 1 is a perspective view schematically illustrating an appearance of a projector device according to one or more embodiments.
FIG. 2 is a cross-sectional view of the projector device according to one or more embodiments.
FIG. 3 is a diagram illustrating a screen according to one or more embodiments.
FIG. 4 is a block diagram illustrating a functional configuration of the projector device according to one or more embodiments.
FIG. 5 is a flowchart illustrating an operation of a threshold adjustment unit according to one or more embodiments.
FIG. 6 is a graph illustrating an example of a relationship between a signal level of a reflected light sensed in a calibration region and a threshold level according to one or more embodiments.
FIG. 7 is a flowchart illustrating an operation of an operation detection unit according to one or more embodiments.
FIG. 8 is a diagram illustrating a screen according to one or more embodiments.
FIG. 9A is a graph illustrating an example of a time change of a signal level of a reflected light sensed in a calibration region according to one or more embodiments.
FIG. 9B is a graph illustrating an example of a relationship between a threshold level and a horizontal position according to one or more embodiments.
FIG. 10 is a diagram illustrating a screen according to one or more embodiments.
FIG. 11 is a diagram illustrating an example of a screen according to one or more embodiments.
FIG. 12 is a diagram illustrating an example of a screen according to one or more embodiments.

### [Detailed Description of the Embodiments]

Embodiments will be described in detail below with reference to the drawings. Each of the embodiments that will be described below illustrates an example of the present invention. Numerical values, shapes, materials, components, disposition positions and connection modes of the components, steps, orders of the steps, and the like illustrated in the embodiments below are examples and are not intended to limit the present invention. From among the components in the embodiments below, components not described in the independent claims are not necessarily required to achieve functions of the present invention.

### (First Example)

### (Configuration)

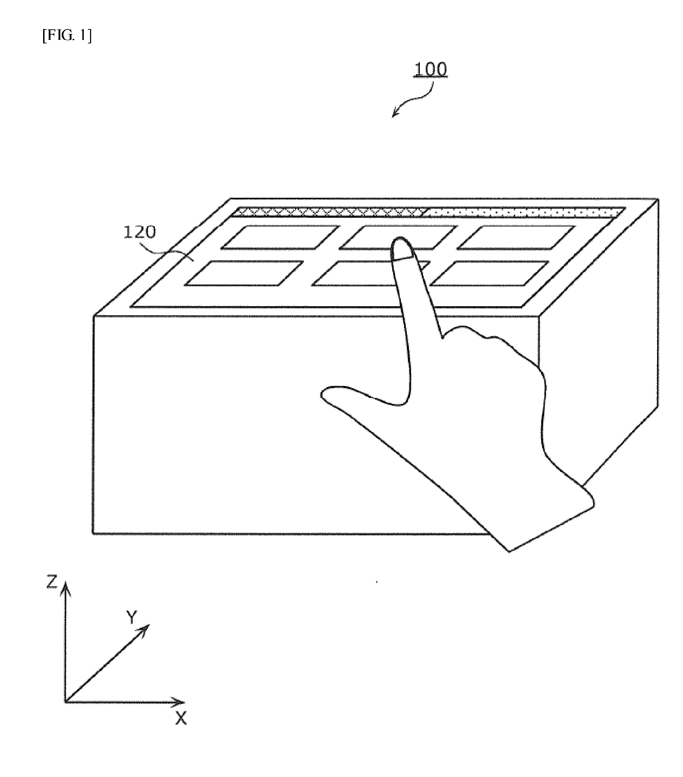

FIG. 1 is a perspective view schematically illustrating an appearance of a projector device according to one or more embodiments of the first example. In the drawings below, the Z axis direction represents an optical axis direction, the X axis direction represents a horizontal (or longitudinal) direction of a screen, and the Y axis direction represents a vertical (or transverse) direction of the screen.

A projector device 100 may be an image projection device of a rear projection type having a virtual user interface (VUI) function. Specifically, the projector device 100 may display an image on a front side of a screen 120 by projecting the image from a rear side of the screen 120. Moreover, the projector device 100 may accept a touch operation from a user on the image displayed on the screen 120.

The touch operation from the user may be detected based on an intensity of a light reflected to the rear side of the screen 120 from a touch object. Specifically, the touch operation may be detected by comparing a level of a light reception signal generated by a light reception unit disposed on the rear side of the screen 120 with a threshold level.

Here, if an intensity of a light irradiated from a light source to the screen 120 changes, the strength of the light reflected from the touch object may also change. For example, the strength of the light irradiated from the light source may change due to temperature change in the projector device 100 or aging degradation of the projector device 100. In this situation, the threshold level used to detect the touch operation may also adaptively be adjusted according to the change of the strength of the light irradiated from the light source to the screen 120.

Therefore, the projector device 100 according to one or more embodiments of the first example may adjust this threshold level used to detect the touch operation according to a state of the projector device 100. Specifically, the projector device 100 may adjust the threshold level based on an intensity of a reflected light in a calibration region provided on the screen 120.

The touch operation may be an operation that makes the touch object substantially contact the screen 120. Making the touch object substantially contact may include bringing the touch object close to the screen 120 to an extent where the touch object can be deemed to have contacted the screen 120 (for example, 5 mm) in addition to making the touch object actually contact the screen 120.

Each component of such a projector device 100 will be described in detail below.

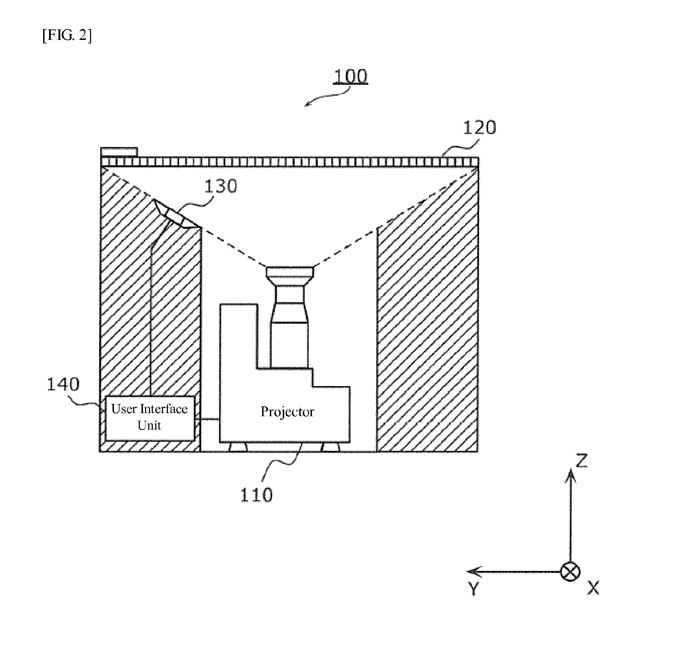

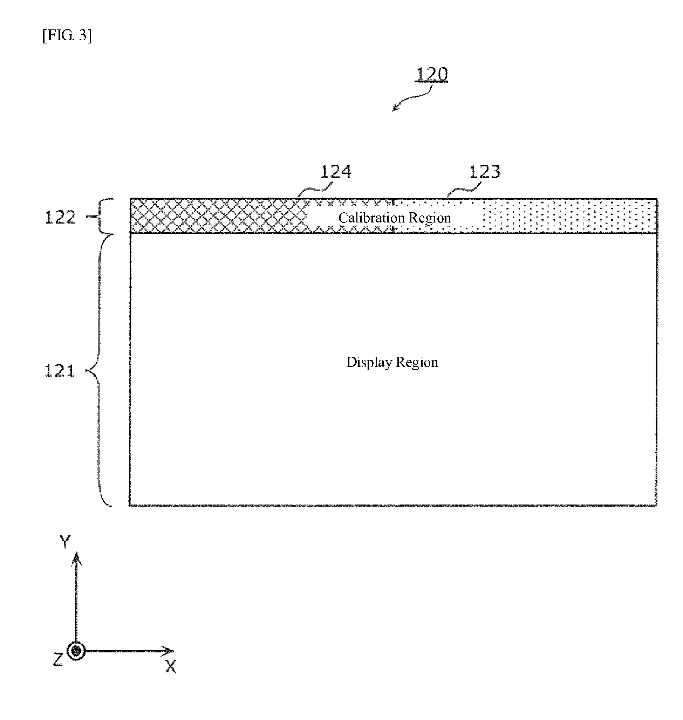

FIG. 2 is a cross-sectional view of the projector device according to one or more embodiments of the first example. FIG. 3 is a diagram illustrating a screen according to one or more embodiments of the first example.

As illustrated in FIG. 2, the projector device 100 may comprise a projector 110, the screen 120, a light reception unit 130, and a user interface unit 140.

The projector 110 may display an image on the front side of the screen 120 by irradiating a light from the rear side of the screen 120. A functional configuration of the projector 110 will be described below.

The screen 120 may be formed from a semitransparent resin (for example, vinyl chloride or the like) for transmitting the light (laser light) irradiated from the projector 110. Moreover, the screen 120 may have a plurality of diffusion lenses (not illustrated) for diffusing the laser light.

Furthermore, as illustrated in FIG. 3, the screen 120 may have a display region 121 and a calibration region 122. The calibration region 122 may extend in a horizontal direction of the screen 120 and have a light reflecting region 123 and a light absorbing region 124. In one or more embodiments of the present example, the calibration region 122 may be provided along an upper edge of the screen 120 of a rectangular shape. Moreover, the light reflecting region 123 and the light absorbing region 124 may be disposed lined up in a horizontal direction.

A light reflecting member may be disposed on the front side of the screen 120 in the light reflecting region 123. The light reflecting member may have a reflectance close to a reflectance of the touch object. For example, when the touch object is a finger, the light reflecting member may be a skin-colored paint or tape.

A signal level of a reflected light sensed in the light reflecting region 123 may be analogous to a signal level of the light reflected from the touch object in the display region 121. That is, the signal level of the reflected light sensed in the light reflecting region 123 may be analogous to a signal level sensed when the touch object contacts or is brought close to the screen 120.

A light absorbing member may be disposed on the front side of the screen in the light absorbing region 124. The light absorbing member may absorb the light from the projector 110 transmitted through the screen 120. The light absorbing member may be, for example, a black cloth, resin, or paint. The light absorbing member may be a cover that covers a periphery of the screen.

A signal level of a reflected light sensed in the light absorbing region 124 may be analogous to a signal level of a light reflected from a rear surface of the screen in the display region 121. That is, the signal level of the reflected light sensed in the light absorbing region 124 may be analogous to a signal level sensed when the touch object does not contact or is not brought close to the screen 120.

The light reception unit 130 may be disposed on the rear side of the screen 120. In one or more embodiments of the present example, the light reception unit 130 may sense a visible light component of the reflected light reflected to the rear side of the screen 120. Moreover, the light reception unit 130 may output the light reception signal according to a size of the visible light component of the sensed reflected light to the user interface unit 140. For example, the light reception unit 130 may comprise a photodiode or the like.

The user interface unit 140 may detect the touch operation from the user on an image displayed in the display region 121 based on the signal level of the sensed reflected light (level of the light reception signal). A functional configuration of the user interface unit 140 will be described below.

Next, taking as an example a projector device of a laser light scanning type, detailed functional configurations of the projector 110 and the user interface unit 140 included in the projector device according to one or more embodiments of the present example will be described.

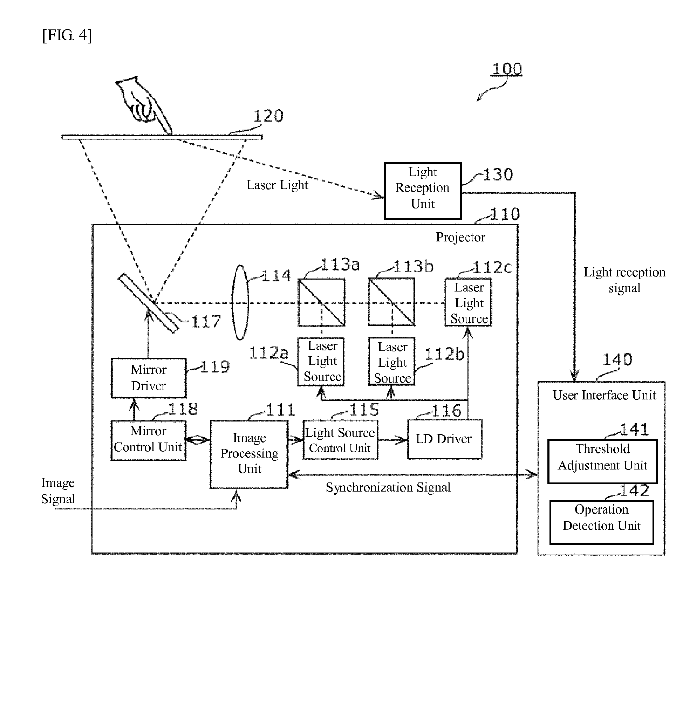

FIG. 4 is a block diagram illustrating a functional configuration of the projector device according to one or more embodiments of the first example. This projector device 100 may display an image by scanning the laser light in the horizontal direction and a vertical direction.

First, the detailed functional configuration of the projector 110 will be described.

The projector 110 may comprise an image processing unit 111; laser light sources 112a, 112b, 112c; dichroic mirrors 113a, 113b; a lens 114; a light source control unit 115; a laser diode (LD) driver 116; a micro electro mechanical system (MEMS) mirror 117; a mirror control unit 118; and a mirror driver 119.

The image processing unit 111 may control projection of an image based on an image signal input from the outside. Specifically, the image processing unit 111 may control irradiation of a laser light from each of the laser light sources 112a, 112b, 112c and controls scanning of the laser light by the MEMS mirror 117 via the mirror control unit 118.

Each laser light source 112a, 112b, 112c may be a laser diode (LD) that outputs a laser light of a monochromatic color component of a predetermined wavelength. For example, the laser light source 112a may output a laser light of a red color component, the laser light source 112b may output a laser light of a green color component, and the laser light source 112c may output a laser light of a blue color component. The laser light output from each of the laser light sources 112a, 112b, and 112c may be, for example, a linearly polarized laser light.

Each of the dichroic mirrors 113a, 113b may have an optical property of reflecting only a laser light of a particular wavelength and transmitting laser lights of other wavelengths. Specifically, the dichroic mirror 113a may reflect only the laser light of the red color component and transmit the laser lights of the other color components. The dichroic mirror 113b may reflect only the laser light of the green color component and transmit the laser lights of the other color components.

The dichroic mirror 113a may be disposed on a downstream side of an optical path of the laser light, and the dichroic mirror 113b may be disposed on an upstream side of the optical path of the laser light. The laser light of the green color component from the laser light source 112b may be reflected by the dichroic mirror 113b, and the laser light of the blue color component from the laser light source 112c may be transmitted through the dichroic mirror 113b. By this, the laser light of the green color component and the laser light of the blue color component may be synthesized at the dichroic mirror 113b.

Furthermore, the laser light of the red color component from the laser light source 112a may be reflected by the dichroic mirror 113a, and the laser light of the green color component and the laser light of the blue color component synthesized as above may be transmitted through the dichroic mirror 113a. By this, the laser light of the red color component, the laser light of the green color component, and the laser light of the blue color component may be synthesized at the dichroic mirror 113a.

The lens 114 may be a condenser lens for condensing the laser light synthesized at the dichroic mirror 113a as above.

The light source control unit 115 may control irradiation of the laser light from each of the laser light sources 112a, 112b, and 112c by driving the LD driver 116 based on a control signal from the image processing unit 111. For example, the light source control unit 115 may control the laser light irradiated from the laser light sources 112a, 112b, 112c so laser lights of colors corresponding to each pixel of the image are synthesized matching a timing at which the MEMS mirror 117 scans the laser light.

The MEMS mirror 117 may scan the laser light to project the image on the screen 120. The laser light may be scanned at a comparatively high speed in the horizontal direction and scanned at a comparatively low speed in the vertical direction by the MEMS mirror 117.

Specifically, the MEMS mirror 117 may reflect the laser light from the lens 114 in a direction according to a deflection angle of the MEMS mirror 117. The laser light may be scanned respectively in the horizontal direction and the vertical direction by the deflection angle of the MEMS mirror 117 changing. As a result, the image may be projected on the screen 120.

The mirror control unit 118 may control the deflection angle of the MEMS mirror 117 by driving the mirror driver 119 based on the control signal from the image processing unit 111.

Next, the detailed functional configuration of the user interface unit 140 will be described.

The user interface unit 140 may comprise a threshold adjustment unit 141 and an operation detection unit 142.

The threshold adjustment unit 141 may adjust the threshold level for detecting the touch operation based on a signal level of a reflected light sensed in the calibration region 122. For example the threshold adjustment unit 141 may adjust the threshold level so the threshold level is lower than the signal level of the reflected light sensed in the light reflecting region 123 and higher than the signal level of the reflected light sensed in the light absorbing region 124.

The operation detection unit 142 may detect the touch operation on the image displayed in a display region by comparing a signal level of a reflected light sensed in the display region 121 and the threshold level adjusted by the threshold adjustment unit 141. For example, the operation detection unit 142 may detect the touch operation when the signal level of the reflected light detected in the display region 121 is higher than the threshold level.

### (Operation)

Next, an operation of the user interface unit 140 of the projector device 100 configured as above will be described. First, an operation of the threshold adjustment unit 141 will be described.

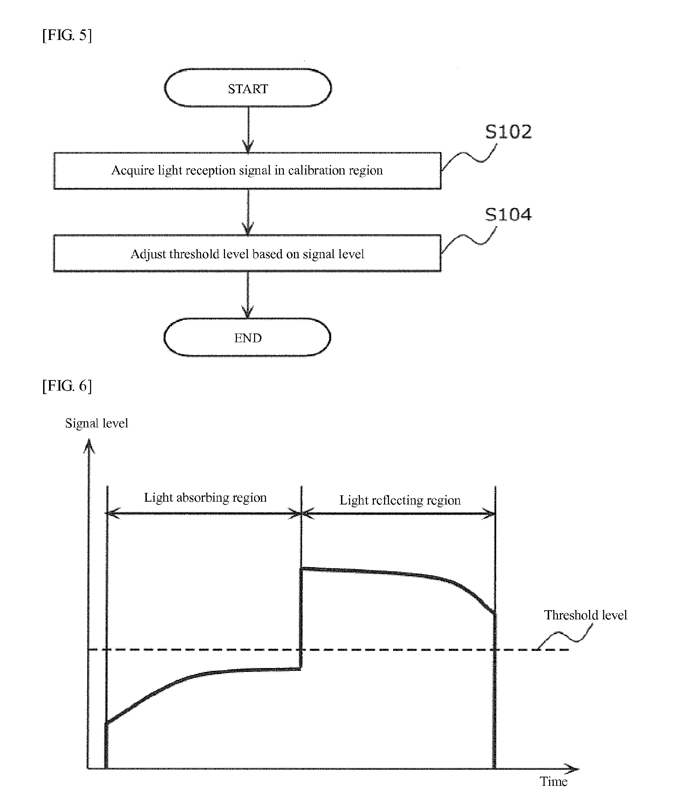

FIG. 5 is a flowchart illustrating an operation of a threshold adjustment unit according to one or more embodiments of the first example. FIG. 6 is a graph illustrating an example of a relationship between a signal level of a reflected light sensed in a calibration region according to one or more embodiments of the first example and a threshold level.

First, the threshold adjustment unit 141 may acquire from the light reception unit 130 a signal (light reception signal) of the reflected light sensed in the calibration region 122 (S102). For example, the threshold adjustment unit 141 may acquire a signal of a reflected light sensed by the light reception unit 130 when the projector 110 is scanning the laser light in the calibration region 122 based on a synchronization signal from the projector 110.

Next, the threshold adjustment unit 141 may adjust the threshold level based on a signal level of the acquired light reception signal (S104). For example, when a light reception signal such as illustrated in FIG. 6 is acquired, the threshold adjustment unit 141 may determine a threshold level lower than the signal level of the reflected light sensed in the light reflecting region 123 and higher than the signal level of the reflected light sensed in the light absorbing region 124.

Such a process for adjusting the threshold level may be executed one frame at a time for the image (video) displayed on the screen. Moreover, the process for adjusting the threshold level may be executed periodically at predetermined time intervals. Moreover, the process for adjusting the threshold level may be executed according to a demand from the user.

In one or more embodiments of the present example, the threshold level may be a constant level that does not depend on a position on the screen 120.

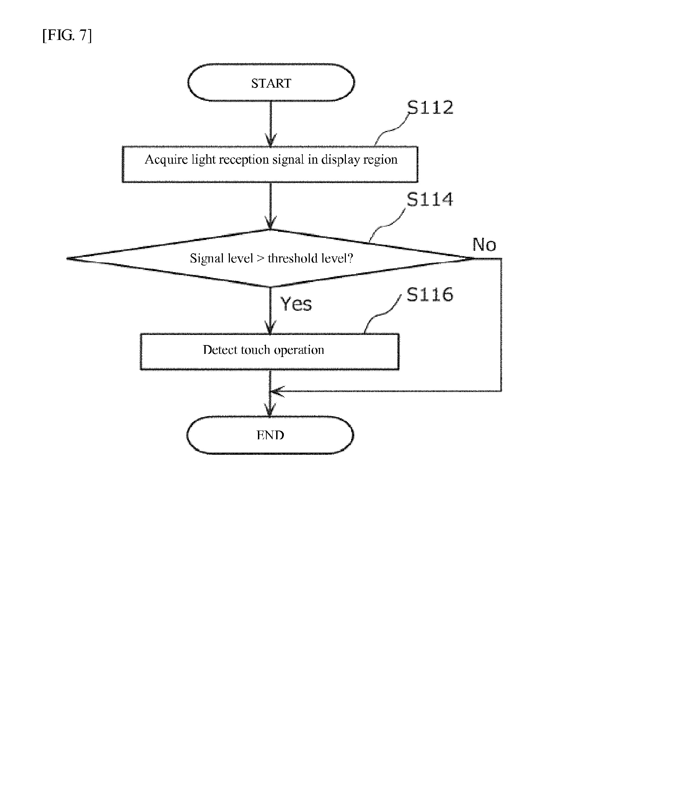

Next, an operation of the operation detection unit 142 will be described. FIG. 7 is a flowchart illustrating an operation of an operation detection unit according to one or more embodiments of the first example.

First, the operation detection unit 142 may acquire from the light reception unit 130 a signal (light reception signal) of the reflected light sensed in the display region 121 (S112). For example, the operation detection unit 142 may acquire the signal of the reflected light sensed by the light reception unit 130 when the projector 110 is scanning the laser light to the display region 121 based on the synchronization signal from the projector 110.

Next, the operation detection unit 142 may determine whether the signal level of the reflected light is higher than the threshold level (S114). Here, if the signal level of the reflected light is higher than the threshold level (Yes at S114), the operation detection unit 142 may detect the touch operation from the user (S116). For example, the operation detection unit 142 may output a signal indicating a touch position, which is a position on the screen 120 where the reflected light having the signal level higher than the threshold level is sensed.

Meanwhile, if the signal level of the reflected light is at or lower than the threshold level (No at S114), the operation detection unit 142 may not detect the touch operation.

### (Effects)

As above, according to the projector device 100 according to one or more embodiments of the present example, the threshold level for detecting the touch operation can be adjusted based on the signal level of the reflected light sensed in the calibration region 122 of the screen 120. Therefore, even in a situation where the state of the projector device 100 is changed, the touch operation can be detected using a threshold level suited to this changed state. As a result, a detection precision of the touch operation from the user on the image displayed on the screen 120 can be improved.

Furthermore, according to the projector device 100 according to one or more embodiments of the present example, the threshold level can be adjusted so the threshold level is lower than the signal level of the reflected light sensed in the light reflecting region 123. Therefore, the threshold level can be made lower than the signal level of the light reflected from the touch object, and the detection precision of the touch operation can be further improved.

Furthermore, according to the projector device 100 according to one or more embodiments of the present example, the threshold level can be adjusted so the threshold level is higher than the signal level of the reflected light sensed in the light absorbing region 124. Therefore, the threshold level can be made higher than the signal level of the light reflected from a back surface of the screen 120, and the detection precision of the touch operation can be further improved.

### (Second example)

Next, embodiments of the second example will be specifically described while referencing the drawings. In the embodiments of the present example, dispositions of a light reflecting region and a light absorbing region in a calibration region differ from those of the first example. In the description of the embodiments of the present example, to prevent the description from becoming redundant, illustration and description of components identical or substantially identical as those of the first example will be omitted.

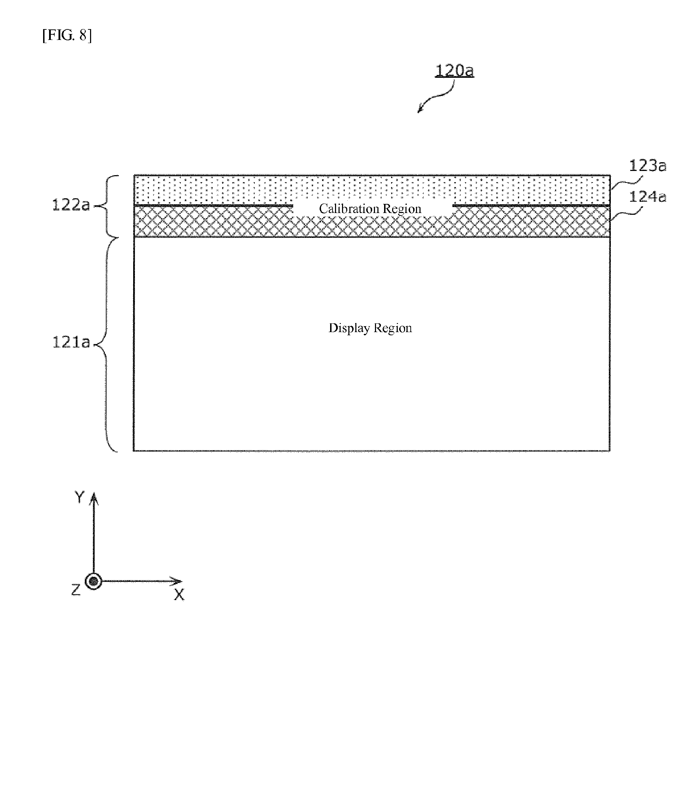

FIG. 8 is a diagram illustrating a screen according to one or more embodiments of the second example. As illustrated in FIG. 8, a screen 120a according to one or more embodiments of the second example has a display region 121a and a calibration region 122a.

The calibration region 122a may have a light reflecting region 123a and a light absorbing region 124a. A length of the light reflecting region 123a and the light absorbing region 124a, respectively, may substantially match a length in a horizontal direction of the screen 120a.

Furthermore, the light reflecting region 123a and the light absorbing region 124a may be disposed lined up in the vertical direction. Specifically, the light reflecting region 123a may be provided along an upper edge of the screen 120a of a rectangular shape. Moreover, the light absorbing region 124a may be provided adjacent to a lower portion of the light reflecting region 123a.

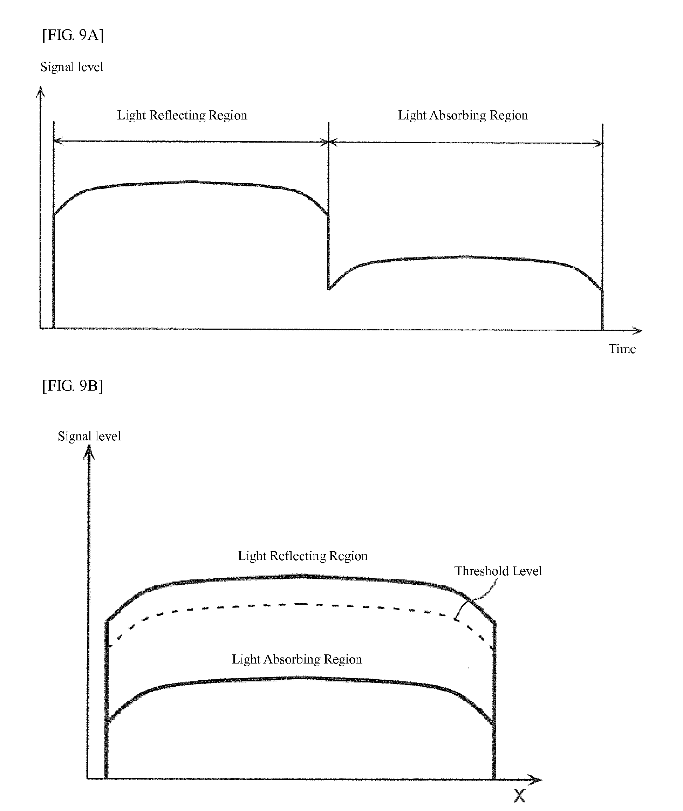

FIG. 9A is a graph illustrating an example of a time change of a signal level of a reflected light sensed in a calibration region according to one or more embodiments of the second example. FIG. 9B is a graph illustrating an example of a relationship between a threshold level and a horizontal position in one or more embodiments of the second example.

As illustrated in FIG. 9A, when the laser light is scanned from an upper side to a lower side of the screen 120a, first, the reflected light may be sensed in the light reflecting region 123a, and then the reflected light may be sensed in the light absorbing region 124a.

The graph in FIG. 9B illustrates a relationship between the signal level of the reflected light sensed as in FIG. 9A and the horizontal position. As illustrated in FIG. 9B, the signal level of the reflected light may change according to the horizontal position. This is because the sensed signal level of the reflected light may depend on a distance from the light reception unit 130 to a position on the screen. Here, the signal level of the reflected light becomes lower to the extent it is near an end of the screen 120.

Therefore, the threshold adjustment unit 141 according to one or more embodiments of the present example may adjust, for each of a plurality of horizontal positions in the calibration region 122a, the threshold level based on a signal level of a reflected light sensed in the horizontal position. That is, the threshold adjustment unit 141 may determine the threshold levels corresponding to each horizontal position. The threshold levels corresponding to each horizontal position determined in this manner may be housed in, for example, a memory (not illustrated).

The operation detection unit 142 according to one or more embodiments of the present example may detect the touch operation by comparing a signal level of a reflected light sensed in the display region 121a and the threshold level corresponding to the horizontal position in the display region 121 a in which the reflected light is sensed. For example, the operation detection unit 142 may specify the horizontal position at which the reflected light is sensed based on the synchronization signal. Then, the operation detection unit 142 may read the threshold level corresponding to the specified horizontal position from the memory. Then, the operation detection unit 142 may detect the touch operation using the read threshold level.

As above, according to one or more embodiments of the projector device 100 of the present example, for each of the plurality of horizontal positions, the threshold level can be adjusted based on the signal level of the reflected light sensed in the horizontal position. Therefore, when detecting the touch operation, the threshold level corresponding to the horizontal position can be used and the detection precision of the touch operation can be further improved.

Furthermore, according to one or more embodiments of the projector device 100 of the present example, because the calibration region 122a extends in the horizontal direction, the threshold level can be suitably adjusted even when the signal level of the reflected light differs at the horizontal position. As a result, the detection precision of the touch operation from the user on an image displayed on the screen 120a can be further improved.

### (Third example)

Next, embodiments of the third example will be specifically described while referencing the drawings. In the embodiments of the present example, dispositions of a light reflecting region and a light absorbing region in a calibration region differ from those of the first and second examples. In the description of the embodiments of the present example, to prevent the description from becoming redundant, illustration and description of components identical or substantially identical as those of the first and second examples will be omitted.

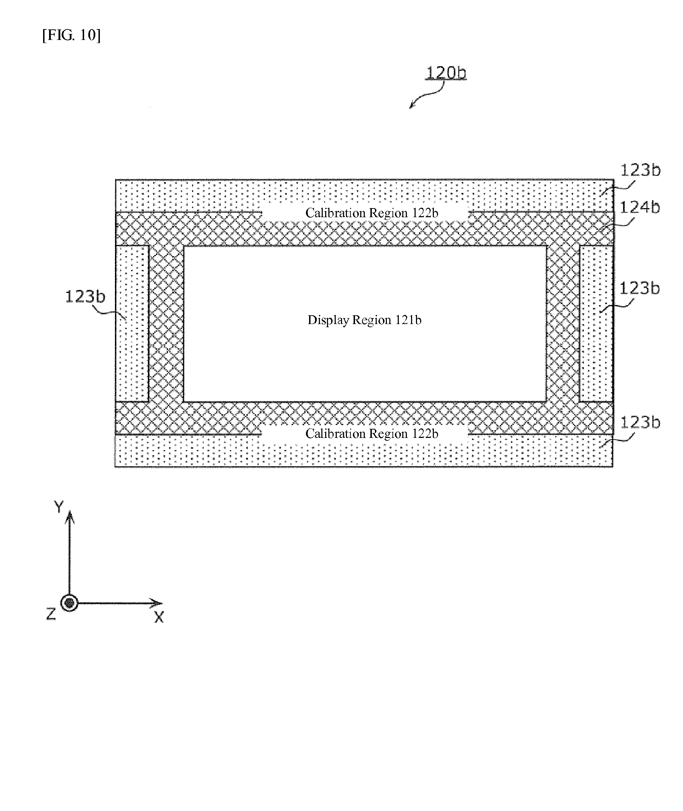

FIG. 10 is a diagram illustrating a screen according to one or more embodiments of the third example. As illustrated in FIG. 10, a screen 120b may have a display region 121b and a calibration region 122b.

The calibration region 122b may extend in the vertical direction in addition to the horizontal direction. Here, the calibration region 122b may be formed so as to surround the display region 121 b.

Furthermore, the calibration region 122b may have a light reflecting region 123b and a light absorbing region 124b. Each of the light reflecting region 123b and the light absorbing region 124b may have a portion extending in the horizontal direction and a portion extending in the vertical direction.

The threshold adjustment unit 141 according to one or more embodiments of the present example may adjust, for each of a plurality of horizontal positions in the calibration region 122b, a threshold level based on a signal level of a reflected light sensed in the horizontal position. Moreover, the threshold adjustment unit 141 may adjust, for each of a plurality of vertical positions in the calibration region 122b, a threshold level based on a signal level of a reflected light sensed in the vertical position.

That is, the threshold adjustment unit 141 may determine the threshold level corresponding to each combination of the horizontal position and the vertical position. The threshold levels corresponding to each combination of the horizontal position and the vertical position determined in this manner may be housed in, for example, the memory (not illustrated).

For example, the threshold adjustment unit 141 may first determine the threshold levels corresponding to each horizontal position for one vertical position as in the embodiments of the second example and then adjust the threshold levels corresponding to each horizontal position using the signal levels of the reflected light sensed in each vertical position.

Furthermore, for example, the threshold adjustment unit 141 may estimate the signal level of the reflected light in a situation where the light reflecting region and the light absorbing region are assumed to be disposed in the display region 121b using the signal levels of the reflected light sensed in the light reflecting region 123b and the light absorbing region 124b. Moreover, the threshold adjustment unit 141 may determine the threshold level in each position (combination of the horizontal position and the vertical position) in the display region 121b using the estimated signal level of the reflected light.

The operation detection unit 142 according to one or more embodiments of the present example may detect the touch operation by comparing the signal level of the reflected light sensed in the display region 121b and the threshold level corresponding to the combination of the horizontal position and the vertical position in the display region 121b in which the reflected light is sensed.

As above, according to one or more embodiments of the projector device 100 of the present example, the calibration region 122b can be extended in the vertical direction. Moreover, for each of the plurality of vertical positions, the threshold level can be adjusted based on the signal level of the reflected light sensed in the vertical position. Therefore, when detecting the touch operation, the threshold level corresponding to the combination of the horizontal position and the vertical position can be used and the detection precision of the touch operation can be further improved.

### (Other examples)

Embodiments of the projector device according to each example are described above, but the present invention is not limited to these embodiments.

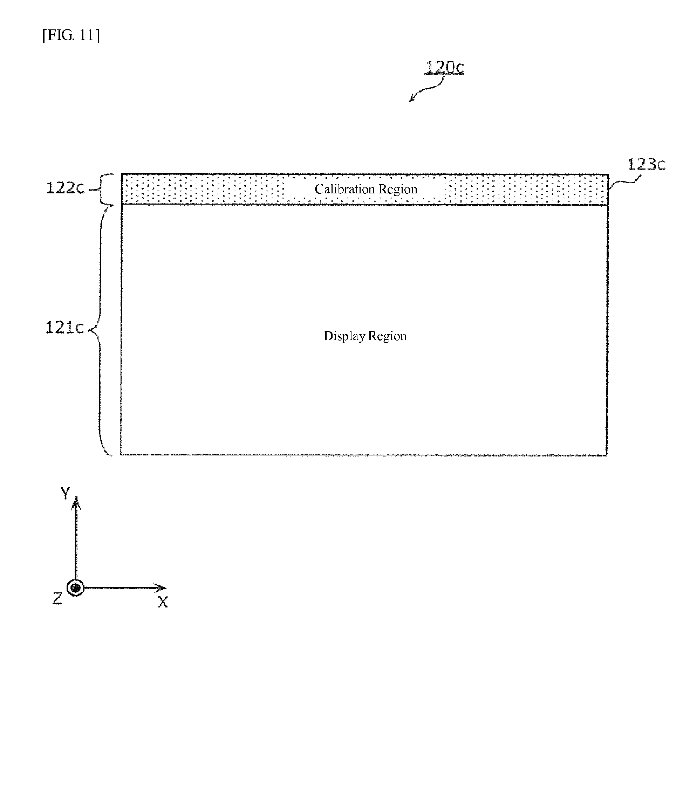

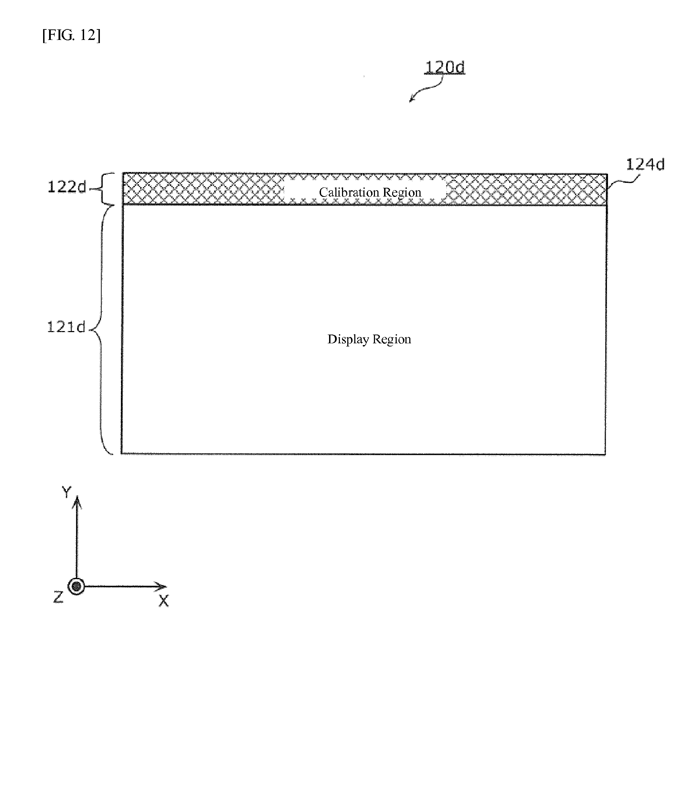

For example, in one or more embodiments above, the calibration region may have both the light reflecting region and the light absorbing region or only have either the light reflecting region or the light absorbing region. A situation where the calibration region only has either the light reflecting region or the light absorbing region will be described below using FIGS. 11 and 12.

FIG. 11 is a diagram illustrating an example of a screen according to one or more embodiments. As illustrated in FIG. 11, a screen 120c may have a display region 121c and a calibration region 122c. The calibration region 122c may have a light reflecting region 123c and need not have the light absorbing region.

In this situation, the threshold adjustment unit 141 may adjust the threshold level so the threshold level is lower than a signal level of a reflected light sensed in the light reflecting region 123c. For example, the threshold adjustment unit 141 may determine the threshold level as a level obtained by multiplying a predetermined coefficient that is smaller than 1 (for example, 0.9 or the like) to a minimum level of the signal level of the reflected light sensed in the light reflecting region 123c.

FIG. 12 is a diagram illustrating an example of a screen according to one or more embodiments. As illustrated in FIG. 12, a screen 120d may have a display region 121 d and a calibration region 122d. The calibration region 122d may have a light absorbing region 124d and need not have the light reflecting region.

In this situation, the threshold adjustment unit 141 may adjust the threshold level so the threshold level is higher than a signal level of a reflected light sensed in the light absorbing region 124d. For example, the threshold adjustment unit 141 may determine the threshold level as a level obtained by multiplying a predetermined coefficient that is greater than 1 (for example, 1.1 or the like) to a maximum level of the signal level of the reflected light sensed in the light absorbing region 124d.

In one or more embodiments above, the threshold adjustment unit 141 may adjust the threshold level according to the image displayed in the display region. Specifically, for example, when an intensity of a light irradiated to display an image (for example, an element of a graphical user interface [GUI] such as a push button) on the display region is greater than an intensity of a light irradiated to the calibration region, the threshold adjustment unit 141 may increase the threshold level.

By this, when the signal level of the light reflected from the touch object changes according to the image displayed in the display region, the threshold level can be changed by adapting to the change of the image and the detection precision of the touch operation can be further improved.

In one or more embodiments above, the projector 110 may irradiate to the calibration region a light corresponding to the image displayed in the display region. For example, the projector 110 may irradiate a light of substantially the same color as a color of the image displayed in the display region. Moreover, for example, the projector 110 may irradiate to the calibration region a light that is substantially the same as a light for displaying the image in the display region.

By this, when the signal level of the light reflected from the touch object changes according to the image displayed in the display region, the threshold level can be adjusted by adapting to the change of the image and the detection precision of the touch operation can be further improved.

In one or more embodiments above, the projector device 100 may detect the touch operation using either visible light or invisible light. That is, the projector 110 may irradiate a light including an invisible light component (for example, an infrared light) for sensing the touch operation. Then, the light reception unit 130 may sense an invisible light component of the reflected light. By this, the touch operation can be detected using a component (invisible light component) other than a component (visible light component) of the light for displaying the image. That is, an influence of the image displayed in the display region can be removed from the signal level of the reflected light, and the touch operation can be stably detected.

In one or more embodiments above, the calibration region is shown and described as a region of an elongated shape extending in the horizontal direction or the vertical direction, but the calibration region does not necessarily have to be such a shape, size, or orientation. For example, the calibration region may be a region of a square shape provided in a corner of the screen. Moreover, the calibration region may be elliptical, circular, triangular, or the like instead of rectangular.

In one or more embodiments above, the light reception unit 130 may sense the reflected light at the plurality of positions in the calibration region or sense the reflected light at one position in the calibration region. In this situation, it is sufficient for the threshold adjustment unit 141 to adjust the threshold level based on the signal level of the reflected light sensed at the one position in the calibration region.

Furthermore, the user interface unit according to one or more embodiments above may be configured as a computer system specifically configured from a microprocessor, a ROM, a RAM, a hard disk drive, a display unit, a keyboard, a mouse, and the like. A computer program may be stored on the RAM or the hard disk drive. The user interface unit may function with the microprocessor operating according to the computer program. Here, the computer program may be configured by combining a plurality of command codes indicating commands to a computer to achieve a predetermined function.

According to one or more embodiments, a portion or an entirety of the components configuring the user interface unit above may be configured from one system large scale integration (LSI). The system LSI may be a super multifunctional LSI manufactured by integrating a plurality of configuring parts on one chip and is specifically a computer system configured including a microprocessor, a ROM, a RAM, and the like. A computer program may be stored on the RAM. The system LSI may function with the microprocessor operating according to the computer program.

According to one or more embodiments, a portion or the entirety of the components configuring the user interface unit above may be configured from an integrated circuit (IC) card removable from the user interface unit or a module of a single body. The IC card or the module may be a computer system configured from a microprocessor, a ROM, a RAM, and the like. The IC card or the module may include the super multifunctional LSI above. The IC card or the module may function with the microprocessor operating according to a computer program. This IC card or module may have tampering resistance.

Furthermore, one or more embodiments of the present invention may be realized as methods illustrated above. Moreover, one or more embodiments of the present invention may be computer programs that realize these methods by a computer or may be a digital signal configured from the computer program above.

Furthermore, one or more embodiments of the present invention may record the computer program above or the digital signal above on a non-temporary storage medium that can be read by a computer, such as a flexible disk, a hard disk, a CD-ROM, a magneto-optical (MO) memory, a DVD, a DVD-ROM, a DVD-RAM, a Blu-ray (registered trademark) disk (BD), or a semiconductor memory, for example. Moreover, one or more embodiments of the present invention may be the digital signal above stored on these non-temporary storage mediums.

Furthermore, one or more embodiments of the present invention may transfer the computer program above or the digital signal above via a network, a data broadcast, or the like, where a telecommunications line, a wireless or wired communication line, and the Internet are representative examples thereof.

Furthermore, one or more embodiments of the present invention may be a computer system comprising a microprocessor and a memory, where the memory stores the computer program and the microprocessor operates according to the computer program.

Furthermore, one or more embodiments of the present invention may be implemented by another independent computer system by storing the program above or the digital signal above on the non-temporary storage medium above and transferring the non-temporary storage medium or transferring the program above or the digital signal above via the network above or the like.

Furthermore, the above embodiments may be combined with each other.

### [Industrial Applicability]

One or more embodiments of the present invention can be used as a rear projection television or the like that can detect a touch operation from a user. Furthermore, certain "units" of the projector device described above may be implemented by a circuit or processor using known methods.

Although the disclosure has been described with respect to only a limited number of embodiments, those skilled in the art, having benefit of this disclosure, will appreciate that various other embodiments may be devised without departing from the scope of the present invention. Also, the features of these embodiments can be used in various combinations with each other, and are not intended to be limited to the specific combinations disclosed herein. Accordingly, the scope of the invention should be limited only by the attached claims.

### [Explanation of Reference Codes]

100 Projector device
110 Projector
111 Image processing unit (or image processor)
112a, 112b, 112c Laser light source
113a, 113b Dichroic mirror
114 Lens
115 Light source control unit (or light source controller)
116 LD driver
117 MEMS mirror
118 Mirror control unit (or mirror controller)
119 Mirror driver
120, 120a, 120b, 120c, 120d Screen
121, 121a, 121b, 121c, 121d Display region
122, 122a, 122b, 122c, 122d Calibration region
123, 123a, 123b, 123c Light reflecting region
124, 124a, 124b, 124d Light absorbing region
130 Light reception unit (or light receiver)
140 User interface unit (or user interface)
141 Threshold adjustment unit (or threshold adjuster)
142 Operation detection unit (or operation detector)

## Claims

1. A projector device of a rear projection type, comprising:
a screen (120, 120a-120d) comprising a display region (121, 121a-121d) in which an image is displayed and a calibration region (122, 122a-122d) where at least a light reflecting member or a light absorbing member is disposed on a front side of the screen;
a projector (110) that emits light to the screen from a rear side of the screen;
a light receiver (130) that senses light reflected to the rear side of the screen; and
a user interface (140) that detects a touch operation on the image displayed in the display region based on a signal level of the reflected light, wherein
the user interface (140) comprises:
a threshold adjuster (141) that adjusts a threshold level for detecting the touch operation based on a signal level of light reflected from the calibration region (122, 122a-122d); and
an operation detector (142) that detects the touch operation by comparing a signal level of light reflected from the display region (121, 121a-121d) with the adjusted threshold level.

2. The projector device according to claim 1, wherein
the calibration region (122, 122a-122d) extends along a longitudinal direction of the screen.

3. The projector device according to claim 2, wherein
the threshold adjuster (141) adjusts a threshold level for each of a plurality of longitudinal positions in the calibration region (122, 122a-122d) based on a signal level of light reflected from the each of the plurality of longitudinal positions, and
the operation detector (142) detects the touch operation by comparing a signal level of light reflected from one of the plurality of longitudinal positions in the display region (121, 121 a-121 d) with the adjusted threshold level for the one of the plurality of longitudinal positions in the display region.

4. The projector device according to claim 3, wherein
the calibration region (122b) further extends along a transverse direction of the screen,
the threshold adjuster (141) further adjusts a threshold level for each of a plurality of transverse positions in the calibration region (122b) based on a signal level of light reflected from the each of the plurality of transverse positions, and
the operation detector (142) detects the touch operation by comparing a signal level of light reflected from a position represented by a combination of one of the plurality of longitudinal positions and one of a plurality of transverse positions in the display region (121b) with the adjusted threshold level for the combination of the longitudinal position and the transverse position in the display region.

5. The projector device according to any of claims 1 to 4, wherein
the calibration region (122, 122a-122c) comprises a light reflecting region (123, 123a-123c) where the light reflecting member is disposed on the front side of the screen, and
the threshold adjuster (141) adjusts the threshold level so that the threshold level becomes lower than a signal level of light reflected from the light reflecting region.

6. The projector device according to any of claims 1 to 5, wherein
the calibration region (122, 122a, 122b, 122d) comprises a light absorbing region (124, 124a, 124b, 124d) where the light absorbing member is disposed on the front side of the screen, and
the threshold adjuster (141) adjusts the threshold level so that the threshold level becomes higher than a signal level of light reflected from the light absorbing region.

7. The projector device according to any of claims 1 to 6, wherein the light receiver (130) senses a visible light component of the reflected light.

8. The projector device according to claim 7, wherein the threshold adjuster further (141) adjusts the threshold level according to the image displayed in the display region.

9. The projector device according to claim 7 or 8, wherein the projector (110) emits light corresponding to the image displayed in the display region to the calibration region.

10. The projector device according to any of claims 1 to 6, wherein
the projector (110) emits light including an invisible light component for sensing the touch operation, and
the light receiver (130) senses an invisible light component of the reflected light.

11. A method for detecting a touch operation for a projector device comprising a screen (120, 120a-120d) with a display region (121, 121a-121d) and a calibration region (122, 122a-122d), the method comprising:
emitting light to the screen from a rear side of the screen (120, 120a-120d);
sensing light reflected to the rear side of the screen (120, 120a-120d);
detecting a touch operation on an image displayed in the display region (121, 121a-121d) based on a signal level of the reflected light, wherein the detecting comprises:
adjusting a threshold level for detecting the touch operation based on a signal level of light reflected from the calibration region (122, 122a-122d); and
detecting the touch operation by comparing a signal level of light reflected from the display region with the adjusted threshold level.

12. The method according to claim 11, wherein the calibration region (122, 122a-122d) extends along a longitudinal direction of the screen, the method further comprising:
adjusting a threshold level for each of a plurality of longitudinal positions in the calibration region (122, 122a-122d) based on a signal level of light reflected from the each of the plurality of longitudinal positions; and
detecting the touch operation by comparing a signal level of light reflected from one of the plurality of longitudinal positions in the display region (121, 121a-121d) with the adjusted threshold level for the one of the plurality of longitudinal positions in the display region.

13. The method according to claim 12, wherein
the calibration region (122b) further extends along a transverse direction of the screen, and
the method further comprises:
adjusting a threshold level for each of a plurality of transverse positions in the calibration region (122b) based on a signal level of light reflected from the each of the plurality of transverse positions; and
detecting the touch operation by comparing a signal level of light reflected from a position represented by a combination of one of the plurality of longitudinal positions and one of a plurality of transverse positions in the display region (121b) with the adjusted threshold level for the combination of the longitudinal position and the transverse position in the display region.

14. The method according to any of claims 11 to 13, wherein
the calibration region (122, 122a-122c) comprises a light reflecting region (123, 123a-123c) where the light reflecting member is disposed on the front side of the screen, and
the method further comprises adjusting the threshold level so that the threshold level becomes lower than a signal level of light reflected from the light reflecting region.

15. The method according to any of claims 11 to 14, wherein
the calibration region (122, 122a, 122b, 122d) comprises a light absorbing region (124, 124a, 124b, 124d) where the light absorbing member is disposed on the front side of the screen, and
the method further comprises adjusting the threshold level so that the threshold level becomes higher than a signal level of light reflected from the light absorbing region.

16. The method according to any of claims 11 to 15, further comprising adjusting the threshold level according to the image displayed in the display region, and emitting light corresponding to the image displayed in the display region to the calibration region.
